# EUROPEAN PATENT SPECIFICATION

(11) **EP 1 368 947 B1**
(45) Date of publication and mention of the grant of the patent: **30.08.2006**
(21) Application number: 01931495.4
(22) Date of filing: 02.03.2001
(51) Int. Cl.: H04L 29/06

(54) **ADDRESSING METHOD AND SYSTEM FOR USING AN ANYCAST ADDRESS**
ADRESSIERUNGSVERFAHREN UND SYSTEM ZUR VERWENDUNG EINER ANYCAST-ADRESSE
PROCEDE ET SYSTEME D'ADRESSAGE POUR L'UTILISATION D'UNE ADRESSE ANYCAST

(43) Date of publication of application: 10.12.2003
(73) Proprietor: Nokia Corporation, 02150 Espoo (FI)
(72) Inventor: RAJAHALME, Jarno, FIN-02400 Kirkkonummi (FI)
(74) Representative: Ungerer, Olaf
(86) International application number: PCT/EP2001/002399
(87) International publication number: WO 2002/071720

(56) References cited:
- EP-A- 1 049 307
- WO-A-98/57275
- US-A- 5 774 660
- HUNT G D H ET AL: "Network Dispatcher: a connection router for scalable Internet services" , COMPUTER NETWORKS AND ISDN SYSTEMS, NORTH HOLLAND PUBLISHING. AMSTERDAM, NL, VOL. 30, NR. 1-7, PAGE(S) 347-357 XP004121412 ISSN: 0169-7552 page 348, left-hand column, paragraph 2 page 348, right-hand column, paragraph 1 page 349, right-hand column, paragraph 5 page 352, left-hand column, paragraph 2 page 352, right-hand column, paragraph 3 - paragraph 5

## Description

### FIELD OF THE INVENTION

The present invention relates to a method and system for addressing a data source in a data network, such as an IP (Internet Protocol) network, by using an address, e.g. an lP anycast address, assigned to more than one interface.

### BACKGROUND OF THE INVENTION

At many Internet sites, the workload required of various services, has grown to the point where a single system is often unable to cope. Offering the same service under a number of different node names is a solution that has been used by a number of sites, for example, by Netscape for its file transfers.

As the Web matures, the ability to react to load imbalances becomes increasingly important. Initially, most Web servers delivered content based on more or less uniformly small files. Consequently, if the number of requests was evenly distributed, the load on the servers would be relatively uniform. However today, and increasingly in the future, Web servers hand out more dynamically-generated results with substantial graphics content and a wide variation in the computation required to produce the results. This variation of content and effort makes it much more difficult to keep a group of servers evenly loaded.

In "Network Dispatcher a connection router for scalable Internet services" by Guemey D. H. Hunta et al, IBM T.J. Watson Research Center, Yorktown Heights, New York, U.S.A., the problem of keeping load evenly spread or balanced on a group of servers is solved by a network dispatcher integrated with the TCP/IP (Transmit Control Protocol / Internet Protocol) stack of a single system. It acts as a dispatcher of connections from-clients who know a single IP address for a service, to a set of servers that actually perform the work. Unlike other approaches, only the data packets going from the clients to the server pass through the network dispatcher, packets from the server to the client may go by other routes, which need not include a network dispatcher. This reduces the load on the network dispatcher, allowing it to potentially stand in front of a larger number of servers so as to spread the load as part of several Web server complexes. In particular, the proposed network dispatcher comprises an executor which is adapted to handle connection allocation and the forwarding of packets for each TCP connection. The network dispatcher supports Virtual Encapsulated Clusters (VECs) which are collections of hosts providing services on a single IP address. The executor maintains a connection table, a VEC table for each VEC, a port table for each VEC, and a server table for each port within a VEC. Load sharing is supported by a user-level manager process that monitors the load on the servers and controls the connection allocation algorithm.

According the addressing architecture of the IP version 6 protocol (IPv6), IPv6 anycast addresses are assigned to more than one interface (typically belonging to different network nodes), with the property that a packet sent to an anycast address is routed to the "nearest" interface having that address, according to the routing protocols' measure of distance. Anycast addresses are allocated from the unicast address space, using any of the defined unicast address formats. Thus, anycast addresses are syntactically indistinguishable from unicast addresses which are assigned to one interface. For any assigned anycast address, there is a longest address prefix P that identifies the topological region in which all interfaces belonging to that anycast address reside. Possible uses of anycast addresses are to identify the set of routers attached to a particular subnet, or the set of routers providing entry into a particular routing domain. Packets sent to the subnet-router anycast address will be delivered to one router on the subnet. The subnet-router anycast address is intended to be used for applications where a node needs to communicate with one of a set of routers on a remote subnet. For example, when a mobile host needs to communicate with one of the mobile agents on ist "home" subnet.

However, currently anycast addressing in IPv6 can only be used by subnet routers, because solutions for a generic anycast use for IP hosts are not defined at present. Additionally, since the current IPv6 specification prohibits the use of anycast addresses as the source address in an IP packet, the usage of anycast addressing is not possible with the existing methods for connection oriented services (e.g. services using TCP transport). If anycast addressing would be used, the next packet from the client would be addressed to the same server anycast address, but could be delivered to a different server due to the anycast addressing method. Hence, the server needs to respond with a real lPv6 interface address as the IPv6 source address. This, however, will break the TCP connection set-up, that does not actually know that the anycast address is an anycast address (anycast addresses look like normal unicast addresses) and is expecting the response packet from the original destination address of the connection set-up message.

Another problem in anycast addressed services is the question of authorization: How does the client initiating the service request know that the server who answers to the anycast addressed request is indeed authorized to do so? A malicious server could be listening to the anycast addressed traffic on the link and immediately answer to the client, spoofing as the real server, and maybe setting up a man-in-the-middle attack.

### SUMMARY OF THE INVENTION

It is an object of the present invention to provide a method and system for addressing a data source in a data network, by means of which an anycast server addressing and authorization can be implemented.

This object is achieved by a method for addressing a data source in a data network by using an anycast address assigned to more than one interface, said method comprising the steps of:
designating said data source in said data network as a possible receiver for data traffic for said anycast address;
mapping said anycast address to a real address of said data source; and
providing a binding update function for maintaining a mapping between said anycast address and said real address of said data source between said data source and either a client, or a network node with an anycast agent functionality, or both.

Furthermore, the above object is achieved by a system for addressing a data source in a data network by using an anycast address assigned to more than one interface, said system comprising:
mapping means for mapping said anycast address to the real address of said data source; and
binding update means for providing a binding update function for maintaining an address relation between a client which has used said anycast address and said data source.

Additionally, the above object is achieved by a network node for addressing a data source in a data network by using an anycast address assigned to more than one interface, said network node comprising binding update means for providing a binding update function for maintaining an address relation between a client which has used said anycast address and said data source.

Accordingly, service users do not need to know the identity of an individual server when initiating a service request, i.e. TCP connection request, but can address the service request to an anycast address representing all the servers for the service in question. The anycast addressing mechanism will then deliver the service request to the nearest server providing the service.

According to an advantageous development, the mapping and/or binding update function are implemented by using Mobile IP protocol features or signalings. In particular, the Mobile IP protocol features may comprise a home address destination option, a binding update destination option, a binding acknowledgement destination option, and a Mobile IP routing header. The binding update function may include a method for address mapping authorization. Furthermore, the mobility management function of the Mobile IP maybe used to hand over clients from one data source to another or from a network interface or link to another.

In case the binding update function is performed at the network node with the anycast agent functionality, the data source may bind with the network node to notify its availability. This binding may be performed by the Mobile IP Home Binding procedure. Moreover, multiple bindings for the same anycast address to different data sources may be managed by the network node. The data source may initiate bindings via multiple different IP addresses. The anycast address may be routed to the network node according to an anycast group defined by the anycast address, and a data source wishing to join the anycast group may send a binding update message to the network node. This may be achieved by using separate unicast or multicast address, is for the binding update message. As an alternative, the Mobile IP dynamic home agent discovery method can be used to determine the address of the network node.

Furthermore, a service handover from a failed link to a working one may be performed by a new binding update to the network node and/or to the clients. A load or capacity information provided by the binding update function or a network topology information may be used for selecting a data source for a client sending a request. Additionally, a binding update with zero life-time may be sent to the network node for each binding initiated by a data source, if the data source needs to by taken down.

Plural ones of the network node may be used to serve the anycast address, and an anycast address delivery may be used to reach one of the plural ones of the network node for an anycast addressed service request. The one of the plural ones of the network node may synchronize a received binding information with other ones of the plural ones of the network node.

Furthermore, a caching of a client to server association may be flushed for clients which do not send data packets to the data source via the network node. The network node may monitor data sources addressed by the anycast address, to provide a fault tolerance and/or fail-over support.

A short term registation may be provided in that the data source periodically registers to the network node or that the network node sends binding requests to the data source. The network node may assume that the data source is down when it does not receive any data packets via a reverse tunnel for response packets from the data source, and verifies this by sending a binding request to the data source. A service request to an anycast address from a client may be directed to a different data source, if the client has been communicating with a failed data source at the same anycast address.

### BRIEF DESCRIPTION OF THE DRAWINGS

In the following, the present invention will be described in greater detail based on preferred embodiments with reference to the accompanying drawing figures, in which:
Fig. 1 shows a scenario of a Mobile IP scheme for anycast server addressing according to a first preferred embodiment;
Fig. 2 shows a scenario of server registering with an anycast agent according to a second preferred embodiment; and
Fig. 3 shows a scenario of the Mobile IP scheme for anycast server addressing with the anycast agent according to the second preferred embodiment.

### DESCRIPTION OF THE PREFERRED EMBODIMENT

The preferred embodiments of the present invention will now be described based on a new usage of the Mobile IP protocol in conjunction with anycast addressed services, that can be connection oriented.

The authorization problem can be solved with the IPsec feature by the server providing a proof that it is actually authorized to respond to the request addressed to the anycast address.

The security aspect of the present invention is based on a key exchange as suggested in the Mobile IPv6 specification. While a Mobile IPv6 mobile node need to provide proof that it is authorized to use the claimed home address, an anycast server needs to provide proof that it is authorized to use the anycast address.

To achieve this, the anycast addressed servers are adapted to bind their real unicast IPv6 address ("care-of-address") to the anycast address ("home address"). As an example, this may be achieved by using the corresponding Mobile IP specification features. The Binding Update is included with the first packet sent in response to the anycast addressed service request. In the same packet, the server includes a Home Address Destination Option containing the anycast address, and uses the real interface IPv6 address as the source address in the packet. Then the client (the "correspondent node") receives the response, the Home Address Option will be processed, allowing the TCP stack (for example) to keep using the original anycast address as required by the current TCP specifications.

Next the client (the "correspondent node") would process the Binding Update, creating a Binding Cache-entry mapping the anycast address to the server's real IPv6 address. It should be noted that this binding is private to the client in question, and neighboring clients may have bindings to different servers, while addressing the service using the same anycast address. The Binding is secured by the Authentication Header included as required by the Mobile IP protocol. All the security issues may be handled in line with the Mobile IP protocol. The next (e.g. TCP) packet being sent to the server would then contain the Binding Acknowledgement (if requested by the server).

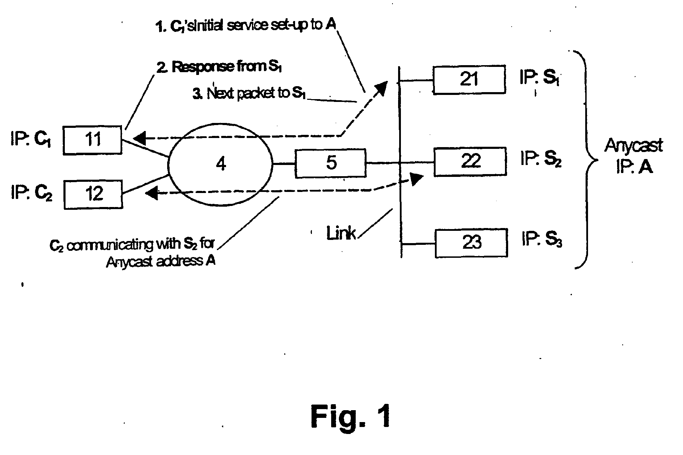

Fig. 1 shows an example scenario for an anycast addressing according to the first preferred embodiment. Two clients C₁ 11 and C₂ 12 are connected via an IP network 4 to a router 5 which is arranged to establish an anycast link to data sources, such as three servers S₁ to S₃ 21 to 23 or the like. In Fig. 1, a client C₁ 11 initiates communication via the router 5 with a service at an anycast address A. If using TCP, this would include a TCP SYN message, and possibly data. The client C₁ 11 receives a response from a server S₁ 21 including both a home. address destination option, and a binding update destination option: If using TCP, this would include an ACK message and a SYN message, and possibly data. The client C₁ 11 responds with a packet being sent directly to the server S₁ 21 including a binding acknowledgement destination option (if requested by the server), and a routing header, e.g. the Mobile IP specified Routing Header, containing the anycast address A. Fig. 1 also shows another client C₂ 12 communicating with another server S₂ 22 using the same anycast address A.

Since the Mobile IPv6 is designed to manage mobility of a mobile node, the server (posing as a mobile node) providing the service can also be mobile. Additionally, the mobility management function could be used to hand over clients from an interface or a link to another, or from a server to another (e.g. for load balancing, to take the server down for maintenance, etc.).

In the above it has been assumed that native anycast routing exists in the IP router 5, delivering the anycast addressed service request to any of the servers S₁ 21 to S₃ 23 providing the service. However, with the current methods this would require typically a manual router configuration, which can be both error prone and can not necessarily react to server load situations etc. The solution, where the servers S₁ 21 to S₃ 23 would be running actual routing protocols to advertise the anycast routes, while possible, is not practical, since the server computers are typically not configured with routing protocol stacks, and perhaps cannot be trusted to inject routes to the network 4. Also, when using only "native" anycast routing, the requirements for Binding Update generation and processing, as described above are strict: If not followed, the service set up can fail.

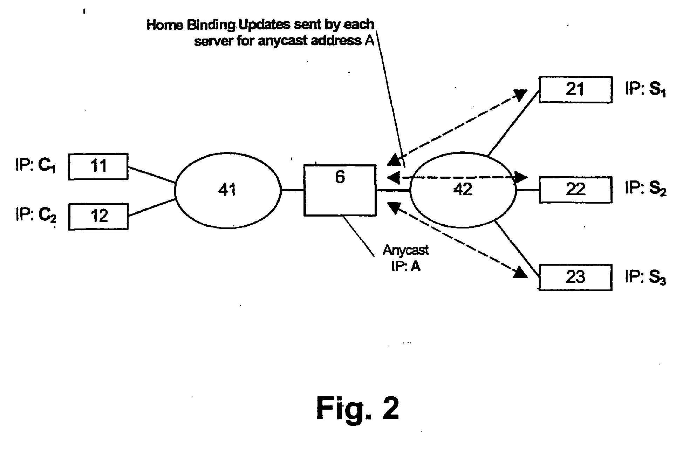

To solve the above identified problems, the second preferred embodiment comprises a network node (anycast agent 6) with an anycast agent functionality (like the Mobile IPv6 "Home Agent") added to the anycast architecture. Fig. 2 shows a scenario of server registering with the anycast agent 6. Compared to Fig. 1, the router 5 has been replaced by the anycast agent 6 which located between a first network part or network 41 and a second network part or network 42. Each individual one of the servers S₁ 21 to S₃ 23 would bind with the anycast agent 6 to let the anycast agent know that they are available. A binding procedure such as e.g. the standard Mobile IP Home Binding procedure can be used for this purpose. A significant difference resides in the fact that the anycast agent 6 will manage multiple simultaneous bindings for the same anycast address, bound to distinct server IP addresses.

Additionally, the same server may initiate bindings via multiple distinct IP addresses, representing distinct physical interfaces, and possibly links, and whole routes, to provide a measure of fault tolerance for the service access. In this scenario the service handover also becomes possible from failed links to the working ones with a new binding update to the anycast agent 6 and/or to the clients ("correspondent nodes").

In this anycast agent scenario, the anycast address in question is routed by the (other) routers to the anycast agent managing the "Anycast Group" defined by that address. The individual servers wishing to join the anycast group will then send a binding update message to the anycast agent 6, possibly using the anycast address itself as the destination address of the binding update. Alternatively, a separate unicast or multicast address could be used for the home binding updates. Optionally, a dynamic home agent discovery method, e.g. the Mobile IPv6 dynamic home agent discovery method, could be used to find the anycast agent address. When the packet gets to the anycast agent 6, it will recognize the home binding in the packet and process it e.g. like a Mobile IPv6 Home Agent would, but managing multiple bindings for each distinct anycast address.

Additionally, the servers S₁ 21 to S₃ 23 can include specific options in the binding update informing the anycast agent 6 on load, capacity, etc. information of the service(s) being provided by the server. This could be utilized by the anycast agent 6 in deciding to which server to assign each client. The anycast agent 6 could also use the network topology information it may have, when choosing a server for a client sending the request.

If an individual server needs to be taken down (for repair etc.), a binding update, e.g: the Mobile IPv6 Binding Update, with zero life-time is sent to the anycast agent 6 and to any client with which a binding has been established by the server in question. Also, individual interfaces from the serves could be taken down with the same method.

Note that if there is only one anycast agent, there is no real anycast addressing based routing delivery being used. However, there could be many anycast agents serving the same anycast address, and anycast address delivery would be used in this case to reach one anycast agent for each anycast addressed service request. If multiple anycast agents are used to serve the same anycast address, the anycast agent receiving the "Home Binding" from the server would need to synchronize this Binding information with other anycast servers, since any one of the agents may receive anycast addressed service requests for the anycast address in question.

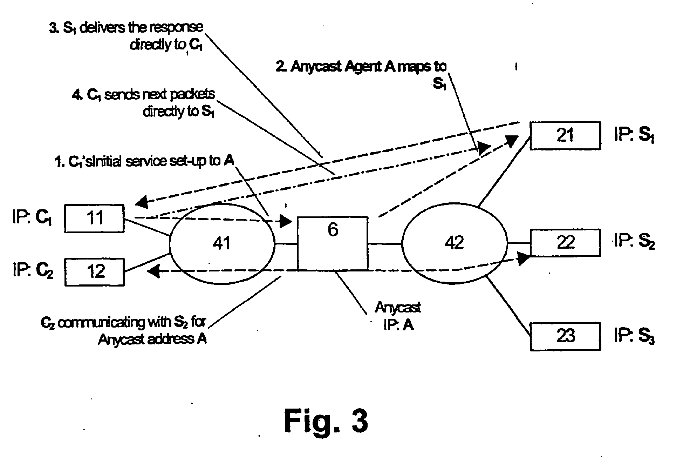

Fig. 3 shows an example scenario for an anycast addressing with an anycast agent 6. The anycast agent 6 receives the anycast addressed service requests sent by clients, e.g. the client C₁ 11 (Fig. 3, step 1). It then consults its binding database, possibly including additional information (load, capacity, network topology), and chooses a server to which to forward the request, e.g. the server S₁ 21 (Fig. 3, step 2). As an example, all normal methods for Mobile IPv6 Home Agent to deliver datagrams to mobile nodes (e.g. IP-in-IP tunneling) can be used for request delivery. The anycast agent 6 would need to cache the client/server mapping for some time, since the client might not be able to process the binding update being sent by the chosen server in a timely manner (or at all). This means that multiple packets from the client to the same server could be delivered via the anycast agent 6, but as soon as the binding update is being processed by the client, the anycast agent 6 is cut from the packet delivery route from the client C₁ 11 to the server S₁ 21 (Fig. 3, step 4). This loosens the requirement by the client C₁ 11 to immediately process the binding update sent by the server S₁ 11. In any case, the server S₁ 21 will include the home address destination option and deliver a response packet to the client C₁ 11 directly (Fig. 3, step 3), if no specific reason is given to deliver the responses via the anycast agent 6. The home address destination option allows the client C₁ 11 to associate the incoming packets with the anycast address used when sending the initial request out.

The caching of client to server association could be flushed for clients that do not send packets to a server via the anycast agent 6. This situation can be interpreted either of two ways: 1) the client has processed a binding update with the server and is communicating with the server directly, or 2) the client is not accessing the service any more. Additionally, for connection oriented transport protocols, the anycast agent 6 could recognize the connection termination between the client and server and flush the association at that point. Any new connections to the same anycast service could then be directed to other servers.

Additionally, the anycast agent 6-can provide fault tolerance and fail-over support by monitoring the servers S₁ 21 to S₃ 23. This can be achieved in the following ways:
1) By only accepting short term registrations (bindings), requiring the servers S₁ 21 to S₃ 23 to register periodically (assuming that the service process-can control the binding updates being sent). Alternatively sending binding requests to the server whenever the anycast agent 6 feels like checking the availability of a server.
2) By requesting the servers S₁ 21 to S₃ 23 to tunnel, initial service response packets via the anycast agent 6. If the anycast agent 6 will not get any packets via this reverse tunnel, it will suspect that the concerned server is down. The anycast agent 6 could verify this by sending a specific binding request to the concerned server to check if the server is responding. If the server is down, it's binding would be removed, so that no more clients would be directed to the failed server. If a client has been communicating with a failed server, it's next-service request to the same anycast address will be directed to a different server, if available.

With reverse tunneling from a server (S1 21 to S3 23) to the anycast agent 6 it is possible to deliver packets to the client (C1 11, C2 12) without including the home address option, and including the anycast address as the source address in these packets. It is also possible to leave out the home address option and to use the anycast address as the packet's source address without reverse tunneling, if the anycast agent 6 (or a group of coordinated anycast agents) arranges consistent delivery of packets from a given client to the same server, and if the network containing the servers allows the servers to use the anycast address as a packet source address.

Yet another alternative for the checking of the server availability is periodic-polling of the availability of each registered server S1 21 to S3 23. The polling may be performed by checking the availability of the node itself within the network or a service corresponding to the anycast address.

One possibility for the checking of the availability of the node within the network is the ICMP (Internet Control Message Protocol) echo procedure. The ICMP is a part of the IP, which is used to handle errors and control messages at the IP layer. The checking of the availability of a service within the node can be performed using application specific means.

The anycast agent 6 may be built on top of a router platform,-possibly starting the implementation from an existing Mobile IP Home Agent implementation. The network servers may be configured as "Mobile Nodes", using the any cast address as home address, and either the same anycast address as the anycast agent address, or a separate IP address as the anycast agent address. Optionally, the Mobile IPv6 dynamic home agent discovery method could be used to find the anycast agent address. When the service clients receive the response packets from the anycast addressed server, the packet is equipped with the home address option and (optionally) the binding update. In case of using the Mobile IP signaling, for the service client this seems as normal Mobile IP, and he will act accordingly. If the client does not process the binding update, all packets from him to the server will go,through the anycast agent 6, who maintains the association to the chosen server, so that the packets from a specific client will go to the same server.

In summary, the present invention solves the addressing and related authorization problem in that the server node responds with the real address as the source address. The packet also comprises a home address destination option and a binding update destination option. The client inserts into the source address the anycast address carried in the home address destination options. Then the packet is passed to upper protocol layers. A reply packet from the client to the server node is sent directly to the server node, the packet containing a binding acknowledgement destination option and a routing Header. The routing header contains the anycast address. Alternatively, an anycast agent 6 may be provided in the network. Packets addressed to the anycast address are received by the anycast agent 6. The anycast agent 6 selects from among the server nodes belonging to the anycast group. The server nodes are registered to the anycast group using a binding procedure. Furthermore, the invention involves the ideas of using load balancing via the anycast agent 6. The anycast agent may request periodic re-registrations or some kind of polling to determine the status of server nodes.

While the present invention has been described for IPv6, Mobile IPv6, and connection oriented services (e.g. TCP transport), the method is also applicable to other cases as well. Examples of other applicable cases/scenarios include services using different transport protocols (such as media streaming, NFS, etc. using UDP, SCTP, RTP, etc.), IPv4, and any possible future versions. Any extensions or modification to Mobile IP protocol are expected to work with this solution. The mentioned Mobile IP mechanisms are only mentioned as examples. Furthermore, this invention is not dependent on Mobile IP, but covers signaling methods where anycast servers can optionally register with a network device to become possible receivers for anycast traffic for a specific anycast address and where the client maps the anycast address to the server's real address and optionally uses this mapping to make transparent use of the anycast address. The anycast server can provide authentication data to the client providing a proof that the server indeed has been authorized to respond to the used anycast address. This proof may be provided either directly between the server and the client, or via intermediate nodes or systems, such as DNS (Domain Name System), certificate authorities, etc.

However, this invention additionally covers the use of the Mobile IP protocol (v4, v6) for this purpose.

## Claims

1. A method for addressing a data source (21 to 23) in a data network by using an anycast address assigned to more than one interface, wherein said method comprises the step of:
a) designating said data source (21 to 23) in said data network as a possible receiver for data traffic for said anycast address;
and wherein said method is **characterised in that** it further comprises steps of:
b) mapping said anycast address to a real address of said data source (21 to 23); and
c) providing a binding update function for maintaining a mapping between said anycast address and said real address of said data source (21 to 23) between said data source (21 to 23) and either a client (11,12), or a network node (6) with an anycast agent functionality, or both.

2. A method according to claim 1, wherein said mapping step and/or said binding update function are implemented by using Mobile IPv6 protocol features.

3. A method according to claim 2, wherein said Mobile IPv6 protocol features comprise a home address destination option, a binding update destination option, a binding acknowledgement destination option, and a Mobile IPv6 routing header.

4. A method according to claim 2 or 3, wherein said binding update function includes a method for address mapping authorization.

5. A method according to any one of the preceding claims, wherein a mobility management function of the Mobile IP is used to hand over clients from one data source to another or from a network interface or link to another.

6. A method according to any one of the preceding claims, wherein said data source (21 to 23) binds with said network node (6) to notify its availability.

7. A method according to claim 6, wherein said binding is performed by the Mobile IP Home Binding procedure.

8. A method according to any one of the preceding claims, wherein multiple bindings for the same anycast address to different data sources (21 to 23) are managed by said network node (6).

9. A method according to any one of the preceding claims, wherein said data source (21 to 23) initiates bindings via multiple different IP addresses.

10. A method according to any one of the preceding claims, wherein a service handover from a failed link to a working one is performed by a new binding update to said network node (6) and/or to the clients (11, 12).

11. A method according to any one of the preceding claims, wherein said anycast address is routed to said network node (6) according to an anycast group defined by said anycast address, and wherein a data source wishing to join said anycast group sends a binding update message to said network node (6).

12. A method according to claim 11, wherein a separate unicast or multicast address is used for said binding update message.

13. A method according to claim 11, wherein the Mobile IP dynamic home agent discovery method is used to determine the address of said network node (6).

14. A method according to any one of the preceding claims, wherein a load or capacity information provided by said binding update function or a network topology information is used for selecting a data source (21 to 23) for a client (11,12) sending a request.

15. A method according to any one of the preceding claims, wherein a binding update with zero life-time is sent to said network node (6) for each binding initiated by a data source (21 to 23), if said data source (21 to 23) needs to be taken down.

16. A method according to any one of the preceding claims, wherein plural ones of said network node (6) are used to serve said anycast address, and wherein an anycast address delivery is used to reach one of said plural ones of said network node (6) for an anycast addressed service request.

17. A method according to claim 16, wherein said one of said plural ones of said network node (6) synchronizes a received binding information with other ones of said plural ones of said network node (6).

18. A method according to any one of the preceding claims, wherein a caching of a client to server association is flushed for clients which do not send data packets to said data source (21 to 23) via said network node (6).

19. A method according to any one of the preceding claims, wherein said network node (6) monitors data sources (21 to 23) addressed by said anycast address, to provide a fault tolerance and/or fail-over support.

20. A method according to any one of claims 5 to 18, wherein said data source (21 to 23) periodically registers to said network node (6) or said network node (6) sends binding requests to said data source (21 to 23) to provide a short term registration, and wherein said data source is assumed to have failed or taken out of service if it has failed to refresh its registration, which is verified by a binding request.

21. A method according to any one of the preceding claims, wherein said network node (6) assumes that said data source (21 to 23) is down when it does not receive any data packets via a reverse tunnel for response packets from said data source (21 to 23), and verifies this by sending a binding request to said data source (21 to 23).

22. A method according to any one of claims 19 to 21, wherein a service request to an anycast address from a client (11, 12) is directed to a different data source, if said client has been communicating with a failed data source at the same anycast address.

23. A system for addressing a data source (21 to 23) in a data network by using an anycast address assigned to more than one interface, **characterised in that** said system comprises:
a) mapping means (11,12 ; 6) for mapping said anycast address to the real address of said data source (21 to 23); and
b) binding update means (11, 12; 6) for maintaining a mapping between said anycast address and said real address of said data source (21 to 23) between said data source (21 to 23) and either a client (11,12), or a network node (6) with an anycast agent functionality, or both.

24. A system according to claim 23, wherein said mapping means (11,12; 6) and/or said binding update means (11,12; 6) are arranged to use a Mobile IP signaling.

25. A system according to claim 23 or 24, wherein said binding update means is provided at a network node (6) with an anycast agent functionality.

26. A system according to claim 25, wherein said data source (21 to 23) is arranged to bind with said network node (6) to notify its availability.

27. A system according to claim 26, wherein said data source is arranged to perform said binding by using the Mobile IP Home Binding procedure.

28. A system according to any one of claims 25 to 27, wherein said data source (21 to 23) provides means for initiation of bindings via multiple different IP addresses.

29. A system according to any one of claims 25 to 28, wherein said system is arranged to route said anycast address to said network node (6) according to an anycast group defined by said anycast address.

30. A system according to any one of claims 25 to 29, wherein plural ones of said network node (6) are provided to serve said anycast address, and wherein said system is arranged to use an anycast address delivery to reach one of said plural ones of said network node (6) for an anycast addressed service request.

31. A system according to claim 30, wherein said one of said plural ones of said network node (6) is arranged to synchronize a received binding information with other ones of said plural ones of said network node (6).

32. A system according to any one of claims 25 to 31, wherein said data source (21 to 23) is arranged to periodically register to said network node (6) or said network node (6) is arranged to send binding requests to said data source (21 to 23), to provide a short term registration.

33. A system according to any one of claims 25 to 32, wherein said network node (6) is arranged to use a load or capacity information provided by said binding update function or a network topology information for selecting a data source (21 to 23) for a client (11,12) sending a request.

34. A system according to any one of claims 25 to 33, wherein said network node (6) is arranged to manage multiple bindings for the same anycast address to different data sources (21 to 23).

35. A network node for addressing a data source (21 to 23) in a data network by using an anycast address assigned to more than one interface, **characterised in that** said network node (6) comprises binding update means for providing a binding update function for maintaining a mapping between said anycast address and said real address of said data source (21 to 23) between said data source (21 to 23) and either a client (11, 12), or a network node (6) with an anycast agent functionality, or both.

36. A network node according to claim 35, wherein said binding update means are arranged to use a Mobile IP signaling for providing said binding update function.

37. A network node according to claim 35 or 36, wherein said network node (6) is arranged to monitor data sources (21 to 23) addressed by said anycast address, to provide a fault tolerance and/or fail-over support.

38. A network node according to any one of claims 35 to 37, wherein said network node (6) is arranged to assume that said data source (21 to 23) is down when it does not receive any data packets via a reverse tunnel for response packets from said data source (21 to 23), and to verify this by sending a binding request to said data source (21 to 23).

39. A network node according to claim 37 or 38, wherein said network node (6) is arranged to direct a service request to an anycast address from a client (11,12) to a different data source, if said client has been communicating with a failed data source at the same anycast address.

## Patentansprüche

1. Verfahren zum Adressieren einer Datenquelle (21 bis 23) in einem Datennetzwerk durch Verwendung einer Anycast-Adresse, die mehr als einer Schnittstelle zugeordnet ist, wobei das Verfahren die Schritte umfasst:
a) Bestimmen der Datenquelle (21 bis 23) in dem Datennetzwerk als möglicher Empfänger für Datenverkehr für die Anycast-Adresse;
und wobei das Verfahren **dadurch gekennzeichnet ist, dass** es weiter die Schritte umfasst:
b) Abbilden der Anycast-Adresse auf eine reale Adresse der Datenquelle (21 bis 23); und
c) Bereitstellen einer Verbindungsaktualisierungsfunktion zum Aufrechterhalten einer Zuordnung zwischen der Anycast-Adresse und der realen Adresse der Datenquelle (21 bis 23) zwischen der Datenquelle (21 bis 23) und entweder einem Client (11, 12) oder einem Netzwerkknoten (6) mit einer Anycast-Agenten-Funktionalität, oder beidem.

2. Verfahren gemäß Anspruch 1, wobei der Zuordnungsschritt und/oder die Verbindungsaktualisierungs-Funktion durch Verwendung von Fähigkeiten des mobilen IPv6-Protokolls umgesetzt sind.

3. Verfahren gemäß Anspruch 2, wobei die Fähigkeiten des Protokolls Mobile IPv6 umfassen eine Heimatadressenzieloption, eine Verbindungsaktualisierungszieloption, eine Verbindungsbestätigungszieloption und einen Routing-Header des Mobile IPv6.

4. Verfahren gemäß Anspruch 2 oder 3, wobei die Verbindungsaktualisierungs-Funktion ein Verfahren zur Adresszuordnungsautorisierung enthält.

5. Verfahren gemäß einem der vorhergehenden Ansprüche, wobei eine Mobilitätsverwaltungsfunktion des Mobile IP verwendet wird, um Clients von einer Datenquelle an eine andere oder von einer Netzwerkschnittstelle oder Verbindung zu einer anderen zu übergeben.

6. Verfahren gemäß einem der vorhergehenden Ansprüche, wobei sich die Datenquelle (21 bis 23) mit dem Netzwerkknoten (6) verknüpft, um ihre Verfügbarkeit anzuzeigen.

7. Verfahren gemäß Anspruch 6, wobei das Verknüpfen durch die Heimatverbindungs-Prozedur des Mobile IP durchgeführt wird.

8. Verfahren gemäß einem der vorhergehenden Ansprüche, wobei mehrere Verbindungen für die selbe Anycast-Adresse mit verschiedenen Datenquellen (21 bis 23) von dem Netzwerkknoten (6) verwaltet werden.

9. Verfahren gemäß einem der vorhergehenden Ansprüche, wobei die Datenquelle (21 bis 23) Verbindungen über mehrere verschiedene IP-Adressen initiiert.

10. Verfahren gemäß einem der vorhergehenden Ansprüche, wobei eine Dienstübergabe von einer fehlgeschlagenen zu einer betriebsbereiten Verbindung durch eine neue Verbindungsaktualisierung zu dem Netzwerkknoten (6) und/oder zu den Clients (11, 12) durchgeführt wird.

11. Verfahren gemäß einem der vorhergehenden Ansprüche, wobei die Anycast-Adresse zu den Netzwerkknoten (6) gemäß einer durch die Anycast-Adresse bestimmten Anycast-Gruppe geleitet wird und wobei eine Datenquelle, die wünscht, sich der Anycast-Gruppe anzuschließen, eine Verbindungsaktualisierungsnachricht an den Netzwerkknoten (6) sendet.

12. Verfahren gemäß Anspruch 11, wobei eine separate Unicast- oder Mulitcast-Adresse für die Verbindungsaktualisierungsnachricht verwendet wird.

13. Verfahren gemäß Anspruch 11, wobei das Dynamic Home Agent Discovery Verfahren des Mobile IP verwendet wird, um die Adresse des Netzwerkknoten (6) zu bestimmen.

14. Verfahren gemäß einem der vorhergehenden Ansprüche, wobei eine durch die Verbindungsaktualisierungsfunktion bereitgestellte Last- oder Kapazitätsinformation oder eine Netzwerktopologieinformation zum Auswählen einer Datenquelle (21 bis 23) für einen eine Anforderung sendenden Client (11, 12) verwendet wird.

15. Verfahren gemäß einem der vorhergehenden Ansprüche, wobei eine Verknüpfungsaktualisierung mit Null-Lebensdauer an den Netzwerkknoten (6) für jede Verbindung, die durch eine Datenquelle (21 bis 23) initiiert worden ist, gesendet wird, falls die Datenquelle (21 bis 23) es erfordert heruntergenommen zu werden.

16. Verfahren gemäß einem der vorhergehenden Ansprüche, wobei mehrere von dem Netzwerkknoten (6) verwendet werden, um die Anycast-Adresse zu bedienen, und wobei eine Anycast-Adressen-Zustellung verwendet wird, um einen von den mehreren Netzwerkknoten (6) für eine Anycast-adressierte Dienstanforderung zu erreichen.

17. Verfahren gemäß Anspruch 16, wobei der eine der mehreren Netzwerkknoten (6) eine empfangene Verbindungsinformation mit anderen von den mehreren Netzwerkknoten (6) synchronisiert.

18. Verfahren gemäß einem der vorhergehenden Ansprüche, wobei ein Zwischenspeichern einer Client-zu-Server-Zuordnung für Clients gelöscht wird, die keine Datenpakete an die Datenquelle (21 bis 23) über den Netzwerkknoten (6) senden.

19. Verfahren gemäß einem der vorhergehenden Ansprüche, wobei der Netzwerkknoten (6) Datenquellen (21 bis 23) überwacht, die durch die Anycast-Adresse adressiert sind, um eine Fehlertoleranz und/oder Failover-Unterstützung bereitzustellen.

20. Verfahren gemäß einem der Ansprüche 5 bis 18, wobei die Datenquelle (21 bis 23) sich periodisch mit dem Netzwerkknoten (6) registriert oder der Netzwerkknoten (6) Verbindungsanfragen an die Datenquelle (21 bis 23) sendet, um eine kurzfristige Registrierung bereitzustellen, und wobei die Datenquelle als fehlgeschlagen oder als außer Dienst genommen angenommen wird, falls sie darin fehlgeschlagen hat, ihre Registrierung zu erneuern, was durch eine Verbindungsanforderung verifiziert wird.

21. Verfahren gemäß einem der vorhergehenden Ansprüche, wobei der Netzwerkknoten (6) annimmt, dass die Datenquelle (21 bis 23) abgeschaltet ist, wenn er nicht irgendwelche Datenpakete über einen Rückwärtstunnel für Antwortpakete von der Datenquelle (21 bis 23) empfängt, und dies durch Senden einer Verbindungsanforderung an die Datenquelle (21 bis 23) verifiziert.

22. Verfahren gemäß einem der Ansprüche 19 bis 21, wobei eine Dienstanforderung an eine Anycast-Adresse von einem Client (11, 12) an eine unterschiedliche Datenquelle gerichtet wird, falls der Client mit einer fehlgeschlagenen Datenquelle unter der selben Anycast-Adresse am Kommunizieren war.

23. Ein System zum Adressieren einer Datenquelle (21 bis 23) in einem Datennetzwerk durch Verwenden einer Anycast-Adresse, die mehreren als einer Schnittstelle zugeordnet ist, **dadurch gekennzeichnet, dass** das System umfasst:
a) Zuordnungsmittel (11, 12; 6) zum Abbilden der Anycast-Adresse auf die reelle Adresse der Datenquelle (21 bis 23); und
b) Verbindungsaktualisierungsmittel (11, 12; 6) zum Aufrechterhalten einer Verbindung zwischen der Anycast-Adresse und der realen Adresse der Datenquelle (21 bis 23) zwischen der Datenquelle (21 bis 23) und entweder einem Client (11, 12) oder einem Netzwerkknoten (6) mit einer Anycast-Agenten-Funktionalität, oder beidem.

24. Ein System gemäß Anspruch 23, wobei die Zuordnungsmittel (11, 12; 6) und/oder die Verbindungsaktualisierungsmittel (11, 12; 6) eingerichtet sind, um eine Signalisierung des IP zu verwenden.

25. System gemäß Anspruch 23 oder 24, wobei die Verbindungsaktualisierungsmittel an einem Netzwerkknoten (6) mit einer Anycast-Agenten-Funktionalität bereitgestellt sind.

26. System gemäß Anspruch 25, wobei die Datenquelle (21 bis 23) eingerichtet ist, um sich mit dem Netzwerkknoten (6) zu verbinden, um seine Verfügbarkeit anzuzeigen.

27. System gemäß Anspruch 26, wobei die Datenquelle eingerichtet ist, die Verknüpfung durch Verwenden der Home Binding Prozedur des Mobile IP durchzuführen.

28. System gemäß einem der Ansprüche 25 bis 27, wobei die Datenquelle (21 bis 23) Mittel bereitstellt zum Initiieren von Verbindungen über mehrere verschiedene IP-Adressen.

29. System gemäß einem der Ansprüche 25 bis 28, wobei das System eingerichtet ist, die Anycast-Adresse an den Netzwerkknoten (6) gemäß einer durch die Anycast-Adresse bestimmten Anycast-Gruppe zu leiten.

30. System gemäß einem der Ansprüche 25 bis 29, wobei mehrere von dem Netzwerkknoten (6) bereitgestellt sind, um die Anycast-Adresse zu bedienen, und wobei das System eingerichtet ist, eine Anycast-Adressen-Zustellung zu verwenden, um einen der mehreren von dem Netzwerkknoten (6) für eine Anycast-adressierte Dienstanforderung zu erreichen.

31. System gemäß Anspruch 30, wobei einer von den mehreren Netzwerkknoten (6) eingerichtet ist, um eine empfangene Verbindungsinformation mit anderen von den mehreren Netzwerkknoten (6) zu synchronisieren.

32. System gemäß einem der Ansprüche 25 bis 31, wobei die Datenquelle (21 bis 23) eingerichtet ist, um sich periodisch mit dem Netzwerkknoten (6) zu registrieren oder der Netzwerkknoten (6) eingerichtet ist, um Verbindungsanforderungen an die Datenquelle (21 bis 23) zu senden, um eine kurzfristige Registrierung bereitzustellen.

33. System gemäß einem der Ansprüche 25 bis 32, wobei der Netzwerkknoten (6) eingerichtet ist, um eine Last- oder Kapazitätsinformation zu verwenden, die durch die Verbindungsaktualisierungsfunktion bereitgestellt ist, oder eine Netzwerktopologieinformation zum Auswählen einer Datenquelle (21 bis 23) für einen Client (11, 12), der eine Anforderung sendet.

34. System gemäß einem der Ansprüche 25 bis 33, wobei der Netzwerkknoten (6) eingerichtet ist, um mehrere Verbindungen für dieselbe Anycast-Adresse zu verschiedenen Datenquellen (21 bis 23) zu verwalten.

35. Netzwerkknoten zum Adressieren einer Datenquelle (21 bis 23) in einem Datennetzwerk durch Verwenden einer Anycast-Adresse, die mehreren als einer Schnittstelle zugeordnet ist, **dadurch gekennzeichnet, dass** der Netzwerkknoten (6) umfasst Verbindungsaktualisierungsmittel zum Bereitstellen einer Verbindungsaktualisierungs-Funktion zum Aufrechterhalten einer Zuordnung zwischen der Anycast-Adresse und der realen Adresse von der Datenquelle (21 bis 23) zwischen der Datenquelle (21 bis 23) und entweder einem Client (11, 12) oder einem Netzwerkknoten (6) mit einer Anycast-Agenten-Funktionalität, oder beidem.

36. Netzwerkknoten gemäß Anspruch 35, wobei die Verbindungsaktualisierungsmittel eingerichtet sind, eine Signalisierung des Mobile IP zum Bereitstellen der Verbindungsaktualisierungsfunktion zu verwenden.

37. Netzwerkknoten gemäß Anspruch 35 oder 36, wobei der Netzwerkknoten (6) eingerichtet ist, Datenquellen (21 bis 23) zu überwachen, die durch die Anycast-Adresse adressiert sind, um eine Fehlertoleranz und/oder Failover-Unterstützung bereitzustellen.

38. Netzwerkknoten gemäß einem der Ansprüche 35 bis 37, wobei der Netzwerkknoten (6) eingerichtet ist, anzunehmen, dass die Datenquelle (21 bis 23) abgeschaltet ist, wenn er keine Datenpakete über einen Rücktunnel für Antwortpakete von der Datenquelle (21 bis 23) empfängt, und um dies durch Senden einer Verknüpfungsanforderung an die Datenquelle (21 bis 23) zu verifizieren.

39. Netzwerkknoten gemäß Anspruch 37 oder 38, wobei der Netzwerkknoten (6) eingerichtet ist, um eine Dienstanforderung an eine Anycast-Adresse von einem Klienten (11, 12) an eine andersartige Datenquelle zu richten, falls der Client mit einer fehlgeschlagenen Datenquelle an der selben Anycast-Adresse am Kommunizieren war.

## Revendications

1. Procédé pour adresser une source de données (21 à 23) dans un réseau de données en utilisant une adresse anycast (adresse à destinataire quelconque) assignée à plus d'une interface, dans lequel ledit procédé comprend l'étape consistant à :
a) désigner ladite source de données (21 à 23) dans ledit réseau de données comme récepteur possible pour le trafic de données pour ladite adresse anycast ;
et dans lequel ledit procédé est **caractérisé en ce qu'**il comprend en outre les étapes consistant à :
b) mapper ladite adresse anycast à une adresse réelle de ladite source de données (21 à 23) ; et
c) fournir une fonction de mise à jour de liaison pour maintenir un mappage entre ladite adresse anycast et ladite adresse réelle de ladite source de données (21 à 23) entre ladite source de données (21 à 23) et soit un client (11, 12), soit un noeud de réseau (6) avec une fonctionnalité d'agent anycast, soit les deux.

2. Procédé selon la revendication 1, dans lequel ladite étape de mappage et/ou ladite fonction de mise à jour de liaison sont implémentées à l'aide de caractéristiques du protocole Mobile IPv6.

3. Procédé selon la revendication 2, dans lequel lesdites caractéristiques du protocole Mobile IPv6 comprennent une option de destination d'adresse mère, une option de destination de mise à jour de liaison, une option de destination d'accusé de réception de liaison, et un en-tête de routage Mobile IPv6.

4. Procédé selon la revendication 2 ou 3, dans lequel ladite fonction de mise à jour de liaison comprend un procédé pour l'autorisation de mappage d'adresse.

5. Procédé selon l'une quelconque des revendications précédentes, dans lequel une fonction de gestion de mobilité du protocole Mobile IP est utilisée pour le transfert de clients d'une source de données vers une autre, ou d'une interface de réseau ou liaison vers une autre.

6. Procédé selon l'une quelconque des revendications précédentes, dans lequel ladite source de données (21 à 23) se relie avec ledit noeud de réseau (6) pour notifier sa disponibilité.

7. Procédé selon la revendication 6, dans lequel ladite liaison est effectuée par la procédure de liaison mère du protocole Mobile IP.

8. Procédé selon l'une quelconque des revendications précédentes, dans lequel plusieurs liaisons pour la même adresse anycast vers différentes sources de données (21 à 23) sont gérées par ledit noeud de réseau (6).

9. Procédé selon l'une quelconque des revendications précédentes, dans lequel ladite source de données (21 à 23) initie des liaisons via plusieurs adresses IP différentes.

10. Procédé selon l'une quelconque des revendications précédentes, dans lequel un transfert de service depuis une liaison défaillante vers une liaison fonctionnelle est effectué par une nouvelle mise à jour de liaison vers ledit noeud de réseau (6) et/ou les clients (11, 12).

11. Procédé selon l'une quelconque des revendications précédentes, dans lequel ladite adresse anycast est routée vers ledit noeud de réseau (6) selon un groupe anycast défini par ladite adresse anycast, et dans lequel une source de données souhaitant joindre ledit groupe anycast envoie un message de mise à jour de liaison au dit noeud de réseau (6).

12. Procédé selon la revendication 11, dans lequel une adresse séparée unicast (à destinataire unique) ou multicast (multidestinataire) est utilisée pour ledit message de mise à jour de liaison.

13. Procédé selon la revendication 11, dans lequel le procédé de découverte d'agent mère dynamique Mobile IP est utilisé pour déterminer l'adresse dudit noeud de réseau (6).

14. Procédé selon l'une quelconque des revendications précédentes, dans lequel des informations de charge ou de capacité fournies par ladite fonction de mise à jour de liaison ou des informations de topologie de réseau sont utilisées pour sélectionner une source de données (21 à 23) pour un client (11, 12) envoyant une requête.

15. Procédé selon l'une quelconque des revendications précédentes, dans lequel une mise à jour de liaison d'une durée de vie nulle est envoyée au dit noeud de réseau (6) pour chaque liaison initiée par une source de données (21 à 23), si ladite source de données (21 à 23) doit être inscrite.

16. Procédé selon l'une quelconque des revendications précédentes, dans lequel plusieurs dudit noeud de réseau (6) sont utilisés pour servir ladite adresse anycast, et dans lequel une remise d'adresse anycast est utilisée pour atteindre un de la pluralité dudit noeud de réseau (6) pour une requête de service adressée à une adresse quelconque anycast.

17. Procédé selon la revendication 16, dans lequel ledit réseau de ladite pluralité dudit noeud de réseau (6) synchronise des informations de liaison reçues avec d'autres noeuds de ladite pluralité dudit noeud de réseau (6).

18. Procédé selon l'une quelconque des revendications précédentes, dans lequel la mise en antémémoire d'une association client vers serveur est nettoyée pour des clients qui n'envoient pas de paquets de données à ladite source de données (21 à 23) via ledit noeud de réseau (6).

19. Procédé selon l'une quelconque des revendications précédentes, dans lequel ledit noeud de réseau (6) surveille des sources de données (21 à 23) adressées par ladite adresse anycast pour fournir un support à tolérance aux pannes et/ou aux défaillances.

20. Procédé selon l'une quelconque des revendications 5 à 18, dans lequel ladite source de données (21 à 23) s'enregistre périodiquement au dit noeud de réseau (6) ou dans lequel ledit noeud de réseau (6) envoie des requêtes de liaison à ladite source de données (21 à 23) pour fournir un enregistrement à court terme, et dans lequel ladite source de données est supposée avoir été en panne ou hors service si elle a échoué à rafraîchir son enregistrement, lequel est vérifié par une requête de liaison.

21. Procédé selon l'une quelconque des revendications précédentes, dans lequel ledit noeud de réseau (6) suppose que ladite source de données (21 à 23) est en panne lorsqu'il ne reçoit pas de paquets de données via un tunnel inverse pour des paquets de réponse depuis ladite source de données (21 à 23), et vérifie cela en envoyant une requête de liaison à ladite source de données (21 à 23).

22. Procédé selon l'une quelconque des revendications 19 à 21, dans lequel une requête de service à une adresse anycast depuis un client (11, 12) est dirigée vers une source de données différente si ledit client a communiqué avec une source de données en panne à la même adresse anycast.

23. Système pour adresser une source de données (21 à 23) dans un réseau de données à l'aide d'une adresse anycast assignée à plus d'une interface, **caractérisé en ce que** ledit système comprend :
a) des moyens de mappage (11, 12 ; 6) pour mapper ladite adresse anycast à l'adresse réelle de ladite source de données (21 à 23) ; et
b) des moyens de mise à jour de liaison (11, 12 ; 6) pour maintenir un mappage entre ladite adresse anycast et ladite adresse réelle de ladite source de données (21 à 23) entre ladite source de données (21 à 23) et soit un client (11, 12), soit un noeud de réseau (6) avec une fonctionnalité d'agent anycast, soit les deux.

24. Système selon la revendication 23, dans lequel lesdits moyens de mappage (11, 12 ; 6) et/ou lesdits moyens de mise à jour de liaison (11, 12 ; 6) sont arrangés pour utiliser une signalisation Mobile IP.

25. Système selon les revendications 23 ou 24, dans lequel lesdits moyens de mise à jour de liaison sont proposés au niveau d'un noeud de réseau (6) avec une fonctionnalité d'agent anycast.

26. Système selon la revendication 25, dans lequel ladite source de données (21 à 23) est arrangée pour se relier avec ledit noeud de réseau (6) pour notifier sa disponibilité.

27. Système selon la revendication 26, dans lequel ladite source de données est arrangée pour effectuer ladite liaison en utilisant la procédure de liaison mère Mobile IP.

28. Système selon l'une quelconque des revendications 25 à 27, dans lequel ladite source de données (21 à 23) offre des moyens pour l'initiation de liaisons via plusieurs adresses IP différentes.

29. Système selon l'une quelconque des revendications 25 à 28, dans lequel ledit système est arrangé pour router ladite adresse anycast au dit noeud de réseau (6) en accord avec un groupe anycast défini par ladite adresse anycast.

30. Système selon l'une quelconque des revendications 25 à 29, dans lequel plusieurs dudit noeud de réseau (6) sont proposés pour servir ladite adresse anycast, et dans lequel ledit système est arrangé pour utiliser une remise d'adresse anycast pour atteindre un de ladite pluralité dudit noeud de réseau (6) pour une requête de service adressée à une adresse quelconque anycast.

31. Système selon la revendication 30, dans lequel ledit réseau de ladite pluralité dudit noeud de réseau (6) est arrangé pour synchroniser des informations de liaison reçues avec d'autres noeuds de ladite pluralité dudit noeud de réseau (6).

32. Système selon l'une quelconque des revendications 25 à 31, dans lequel ladite source de données (21 à 23) est arrangée pour s'enregistrer périodiquement au dit noeud de réseau (6) ou dans lequel ledit noeud de réseau (6) est arrangé pour envoyer des requêtes de liaison à ladite source de données (21 à 23) pour fournir un enregistrement à court terme.

33. Système selon l'une quelconque des revendications 25 à 32, dans lequel ledit noeud de réseau (6) est arrangé pour utiliser des informations de charge ou de capacité fournies par ladite fonction de mise à jour de liaison ou des informations de topologie de réseau pour sélectionner une source de données (21 à 23) pour un client (11, 12) envoyant une requête.

34. Système selon l'une quelconque des revendications 25 à 33, dans lequel ledit noeud de réseau (6) est arrangé pour gérer plusieurs liaisons pour la même adresse anycast vers différentes sources de données (21 à 23).

35. Noeud de réseau pour adresser une source de données (21 à 23) dans un réseau de données à l'aide d'une adresse anycast assignée à plus d'une interface, **caractérisé en ce que** ledit noeud de réseau (6) comprend des moyens de mise à jour de liaison pour fournir une fonction de mise à jour de liaison pour maintenir un mappage entre ladite adresse anycast et ladite adresse réelle de ladite source de données (21 à 23) entre ladite source de données (21 à 23) et soit un client (11, 12), soit un noeud de réseau (6) avec une fonctionnalité d'agent anycast, soit les deux.

36. Noeud de réseau selon la revendication 35, dans lequel lesdits moyens de mise à jour de liaison sont arrangés pour utiliser une signalisation Mobile IP pour fournir ladite fonction de mise à jour de liaison.

37. Noeud de réseau selon les revendications 35 ou 36, dans lequel ledit noeud de réseau (6) est arrangé pour surveiller des sources de données (21 à 23) adressées par ladite adresse anycast pour fournir un support à tolérance aux pannes et/ou aux défaillances.

38. Noeud de réseau selon l'une quelconque des revendications 35 à 37, dans lequel ledit noeud de réseau (6) est arrangé pour supposer que ladite source de données (21 à 23) est en panne lorsqu'il ne reçoit pas de paquets de données via un tunnel inverse pour des paquets de réponse depuis ladite source de données (21 à 23), et pour vérifier cela en envoyant une requête de liaison à ladite source de données (21 à 23).

39. Noeud de réseau selon les revendications 37 ou 38, dans lequel ledit noeud de réseau (6) est arrangé pour diriger une requête de service à une adresse anycast depuis un client (11, 12) vers une source de données différente, si ledit client a communiqué avec une source de données en panne à la même adresse anycast.
